# EUROPEAN PATENT APPLICATION

(11) **EP 0 895 094 A1**
(43) Date of publication of application: **03.02.1999**
(21) Application number: 98113343.2
(22) Date of filing: 17.07.1998
(51) Int. Cl.: G01S 7/52, G01S 15/89

(54) **Ultrasound bidimensional imaging method with equipment having power Doppler examination facilities**

(30) Priority: 31.07.1997 IT SV970039
(71) Applicant: Esaote S.p.A., 15033 Casale Monferrato (AL) (IT)
(72) Inventor: Maccio, Marco, I-16155 Ge-Pegli (IT); Pomata, Francesco, I-16159 Ge-Rivarolo (IT); Pellegretti. Paolo, I-16155 Ge-Pegli (IT)
(74) Representative: Karaghiosoff, Giorgio Alessandro, Dipl.-Phys.

(57) **Abstract**

The invention relates to a method for ultrasound bidimensional image reconstruction, in biomedical applications. The method provides that the tissues to be examined are insonated by an ultrasound probe (1). The echoes received by the probe (1), after being amplified (2) and processed by the receiving circuitry (3-12), are transformed into driving signals for the display devices (13, 14). Since the intensity of the received echoes depends on the type of tissues generating them, what is displayed is a bidimensional map, based on a desired scale of color values (14), relating to the structure of the section under examination. The peculiarity of the method consists in that the processing hardware is substantially the same as currently present in ultrasound equipment for flow analysis in Power Doppler mode. The proposed idea, involving digital processing, is particularly fit for upgrading analog equipment, as it extends their potential use, particularly addressing the development of examination methods with contrast media, while ensuring flexibility to the adaptations required by the different types of echoenhancing substances introduced on the market.

## Description

The invention relates to a method for ultrasound bidimensional image reconstruction and acquisition (B-Mode) through insonation, and reception thereby, of the echoes backscattered by the tissues under examination.

Insonation, i.e. irradiation of tissues with ultrasonic waves, is made along several lines of sight, in a scanning process intended to cover the whole section of tissues to be examined. For each scan line, the intensity of the received echoes provides an indication on the type tissues passed through by the ultrasound beam. After being properly amplified and processed, the received echoes are used to drive the display devices. The intensity of the echoes received for each scan line is displayed on the screen on the basis of a selected color scale. The different scan lines, properly arranged and interpolated on the display screen, reproduce the tissue map relating to the examined section.

From the implementation point of view, B-mode scanning may be obtained in ultrasound equipment either by analog or by digital circuitry.

Historically, analog apparati were introduced first on the market and digital equipment were introduced only later. While the former have the advantage of a higher simplicity, digital equipment are surely to be preferred for their being more flexible per se, for requiring less critical setup procedures, and for providing the possibility of more complex processing operations.

The proposed method, being based on digital processing, has all the advantages involved by the technology in use, and is particularly interesting in upgrading analog equipment having Power Doppler [15] flow analysis facilities, the latter characteristic being currently available among the basic facilities of almost all low-price class equipment. The circuitry in use is substantially the same, variations thereto mainly depending on the control software, which may be modified in a less troublesome way, both in cost and in developing time.

In short, conversely to a B-Mode chain, providing static information, i.e. an image of the type of tissues being in the analyzed section, a Power Doppler chain provides dynamic information, in the form of an image of the flows being in the section. This is obtained by exploiting the frequency variations of the echoes received from the areas in which the flow is present, with respect to the characteristic frequency of the transmitted ultrasound pulses. The physical phenomenon whereon these frequency variations are based is known in literature as Doppler effect, which also names the examination technique. This diagnostic method, alternative with respect to B-Mode, by considerably increasing the associated sensitivity, has expanded the field of application of ultrasounds. However, Power Doppler techniques, even when used on the most up-to-date digital equipment, though contributing in the introduction of ultrasounds as one of the main non-invasive diagnostic systems, in some applications, for example, in the examination of organs like liver or pancreas, hasn't imposed as an alternative to the traditional magnetic resonance and computerized tomography techniques yet. These techniques, though much more invasive and expensive, still provide incomparable results in terms of sensitivity and accuracy of the produced images.

The introduction of contrast media for ultrasound applications on the market is changing this scenario [1-8]. These substances, when injected in the tissues to be examined, artificially increase their echogenicity, and extend diagnostic possibilities to applications, like the examination of deep vessels having a low-speed flow, in which the equipment sensitivity would be insufficient.

However, the considerable enhancement of signals, due to the injection of contrast media, implies new characteristics of the backscattered signals, which, when subjected to usual processing methods, available on normal ultrasonic equipment, would produce undesirable effects. Particularly, in the B-Mode imaging process, the parenchymal echoenhancement effect, caused by the perfusion of contrast media at the microcirculation level, and generally in all blood vessels, determines a poorer image contrast, and a more difficult distinction of the borders of vessels and organs.

Hence, the effort of ultrasound equipment manufacturers is currently focused towards the development of processing techniques, both for B-Mode and for Doppler modes, which can detect more effectively the different perfusion levels of contrast media.

Different methods have been proposed in literature [9 - 14], in the attempt to reach this goal.

Substantially, these techniques are based on the attempt to exploit the fact that contrast media, wherever they are permeated, not only increase the energy level of the backscattered echoes, but also cause the backscattering spectra to be shifted, with respect to the typical spectra of the transmission signals. This "coloring" behavior of the backscattering spectrum is due to the fact that contrast media are in fact nonlinear reflectors. Therefore, all that cannot be distinguished by simply observing the energy of the backscattered signals, can be distinguished by observing the differences between backscattering spectra, which, in the regions penetrated by the contrast medium, show specific characteristics.

Particularly, in B-Mode imaging, by tuning the receivers to frequencies other than transmission ones, anyway having a high backscattering level of contrast media, the contribute of non-permeated tissues (which are presumed to behave mainly as linear reflectors), is notably lower than that of permeated tissues, whereby ultrasound images will offer a good contrast level between the perfused and non-perfused areas.

These techniques, in which the analysis of ultrasonic signals is made at frequencies, both harmonic or sub-harmonic, other than those of transmitting pulses, are known as Harmonic Imaging techniques, and in B-Mode and Power Doppler analysis, are named B-Mode Harmonic Imaging and Power Doppler Harmonic Imaging respectively.

While the implementation of these techniques is rather easy on digital equipment, the task is quite different in analog equipment, due to considerable problems, dealing with the passband and with the linearity of the transmit-receive chain, of the complex design of receiving selecting filters, etc. In digital equipment, the band response provided by circuitries currently in use is sufficient per se, even to meet the requirements of these new operation modes, and further the selection of the receiving bands of interest is obtained by means of software-implemented numeric filters.

The problem of dealing with analog equipment is even greater when thinking of upgrading existing equipment, since this always involves difficult and expensive modifications, which may eventually make the development cost-ineffective.

The digital implementation also has a higher potential as regards processing possibilities, which are well above simply tuning the response to a frequency other than the transmission one; algorithms may be implemented, involving several measures on the receiving spectrum, with subsequent compositions thereof, in order to enhance the contrast between perfused areas and the others, not penetrated by the contrast medium [10].

As stated at the opening of the paragraph, the invention is proposed as a practical and cheap method of implementing a digital B-Mode imaging. It may be applied both on digital equipment and on analog equipment having Power Doppler operating facilities. It is apparent that its main interest is for the upgrading of analog equipment, which are allowed to operate in the numeric mode, with all evident advantages implied thereby. Particularly, it is fit for being used as an efficient method for the development of B-Mode Harmonic Imaging.

The invention achieves the above stated objects, by at least partially using, for the so-called B-Mode Harmonic Imaging, the processing chain for Power Doppler ultrasound imaging, wherein Wall-Filters for suppressing the artifacts, produced by vessel wall motion and by the unavoidable relative probe-patient displacements, are by-passed.

In this manner, the measurements made by the Power Doppler chain provide a measure of the intensity of echoes coming from the different tissues irradiated by the ultrasonic probe; these measures, properly shown on the display screen on the basis of a selected color scale, produce an image similar to that obtained by a traditional B-Mode chain.

Particularly, the method according to the invention provides the following steps:
1. irradiation of the tissues under examination with ultrasound signals, emitted by an ultrasound probe, operating at desired frequency and power levels.
2. reception of echoes after each irradiation.
3. repetition of steps 1) and 2), controlled by the transmit/receive circuits, for the different lines of sight, so as to cover the whole section under examination by a single scan.
4. quadrature demodulation, at the desired frequency, of the received echoes.
5. calculation of the energy of the received and demodulated echoes.
6. display of the energies of the different processed echoes on the screen, on the basis of a predetermined color scale.

The demodulating operation is to be carried out because the received echoes are signals, having the carrier frequency of the irradiation signals, whose amplitude is modulated by the different backscattering level of the tissues contacted by the propagating transmission signal. When the transmitting signal encounters blood vessels, the receiving signal also has, besides an amplitude modulation, a frequency modulation (Doppler shift).

This operation, in case of B-Mode imaging, has the function to separate, from the received signals, the modulating signal, which contains information about the type of tissues being in the insonated areas.

The demodulation frequency may be equal to the one used for transmission, in which case a normal B-Mode imaging is performed, or a frequency, harmonic or sub-harmonic, other than the transmission frequency, when a B-Mode Harmonic Imaging analysis is to be performed.

The quadrature demodulator is incoherent, i.e. not linked to the carrier phase, and is the equivalent of the envelope detector used in analog B-Mode chains. The received signals are multiplied by sin/cos driving signals at the desired demodulation frequency. What is physically obtained is the translation of the spectrum of the received signals towards low frequencies, to an extent corresponding to the demodulation frequency. In this manner, the demodulation frequency is translated to the origin (0 Hz) and the signal resulting from the two chains is the envelope of the received radio-frequency signal. A further low-pass filtering operation, executed separately on the output of the two sin/cos channels, selects the portion of the spectrum to be examined.

By jointly processing the apparently redundant information of the two sin/cos chains, the residual apparent amplitude modulation, caused by the unavoidable phase variations of the transmission carrier, may be avoided.

Demodulation may be considered as a sort of passband filter, centered on the demodulation frequency.

The above description makes it apparent that, when using contrast media, Harmonic Imaging examinations may be performed by simply tuning the demodulator to a harmonic or a sub-harmonic of the transmission carrier.

In order to obtain the same result with a traditional analog chain, complex high-pass filters should be developed, and the whole processing chain should be reviewed, the latter being likely to operate at much higher frequencies than those typically used with transmitting radio-frequency carriers. Furthermore, there would still be the problem of providing several high-pass filters, one for each possible working harmonic/sub-harmonic, which would give a "closed" system, unless the hardware is updated each time a new contrast agent, having a different frequency response, is introduced on the market. The proposed B-Mode imaging technique does not have such a problem, since it makes it possible to select different receiving frequency bands by simply driving the demodulator with sin/cos tones having different frequencies: by providing the system with an oscillator being able to provide tones within a reasonable sufficient frequency range, a system may be obtained which can virtually adapt to any contrast medium.

If this invention is to be applied to B-Mode Harmonic Imaging, the only hardware modification to provide in the Power Doppler chain is the revision of the circuit for generating driving frequencies for the quadrature demodulator, extending its field of action to any harmonic and sub-harmonic frequencies, whereat contrast media may operate.

The output signals of the demodulator are digitized and processed as if they were normal Power Doppler signals, except that high-pass Wall-filters, normally used to suppress the low-frequency contribute of surrounding tissues and the artifacts, determined by vessel wall and probe-patient movements have been by-passed. When a Power Doppler estimate is applied on signals of this type, it becomes a measure of the intensity of the echoes coming from tissue samples being along the current line of sight, similar to that performed by a conventional B-Mode chain.

In normal Power Doppler, since sensitivity is directly proportional to the tissue insonation energy, each irradiation consists of a number of pulses. Even though this is detrimental to axial resolution, it is acceptable for this particular application, the object being to detect the flow presence and not to obtain high resolution imaging.

Conversely, in the particular case of the present invention, in order to obtain normal imaging capacities, having a satisfactory resolution, a modification of the system software is needed to reduce the number of pulses to a few units.

Among the necessary software modifications to the typical processing of Power Doppler chain, the temporal averaging process between consecutive estimates along a line of sight, is to be reduced. In fact, while this is useful in Power Doppler processing, to suppress the undesired effects of artifacts, it is unnecessary for imaging purposes and, since its only practical effect would be the reduction of frame rate, the number of shots should be preferably limited to the minimum needed to perform an estimate of the backscattered echoes: for example, if the typical cross-correlation algorithm is used, two shots are sufficient.

Finally, as far as displaying is concerned, in order to obtain a B-Mode image, whose characteristics are similar to those obtainable with a normal chain, there should be provided an appropriate grey scale.

From the implementation point of view, it should be noted that the oscillator for driving the quadrature demodulator, is the only element to be replaced in Power chain, for implementing the invention illustrated herein. All circuitry normally in use, both in terms of passband, and of resolution of analog-to-digital converters, are generally sufficient for imaging applications.

The other modifications, mentioned hereinbefore, are simple revisions to the software for controlling signal processing.

The characteristics of the invention and the advantages derived therefrom will appear more clearly from the following description of an embodiment illustrated in the annexed drawings, in which:
Fig. 1 shows a block diagram of a processing chain which may be used for obtaining B-Mode Harmonic Imaging according to the invention.
Figs. 2a and 2b show a conventional B-Mode image and the corresponding image obtained by B-Mode Harmonic Imaging respectively, of a tissue region, in which a contrast medium has been injected.

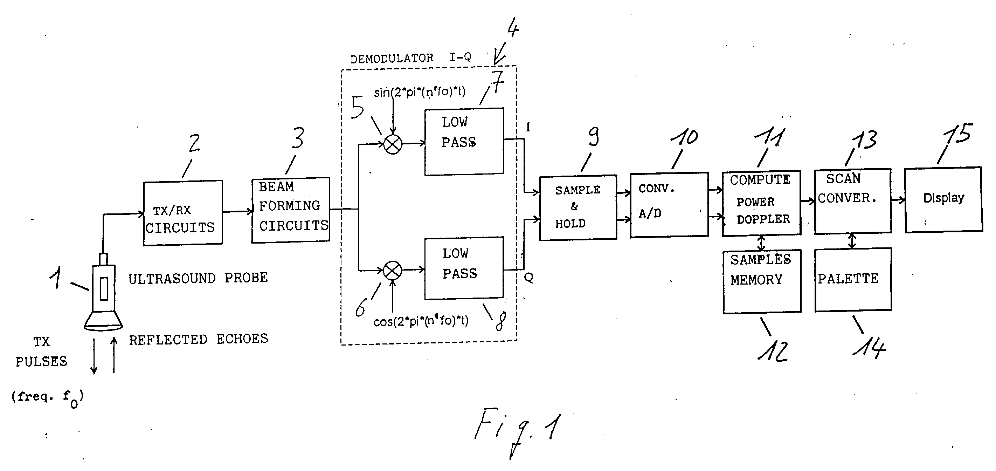

With reference to fig. 1, a probe 1, consisting of an array of ultrasonic transducers, is used to insonate the tissues to be examined, and to detect the consequent backscattered echoes. The transmit and receive circuits 2, 3 are used to generate and time the driving pulses for the different transducer elements, in such a way as to properly focus the ultrasonic beam along the different lines of sight and on predetermined focuses.

For each scan line, the transducer elements of the probe are driven so as to emit ultrasonic waves in the patient body, by activating proper groups of elements, and by delaying excitation, so as to ensure the desired beam focusing.

After each transmission, the unit is switched to receiving. The backscattered echoes, after being properly amplified 2, are realigned according to the transmission focusing, and combined to produce a sequence of coherent echoes 3.

Then, the signals are quadrature-demodulated 4. This operation, as previously explained in detail, consists in base-band translating the band corresponding to the n·f0 harmonic (n being an integral or fractional number) of the f0 transmission carrier frequency. In actual implementation, the operations of the demodulator consist in multiplying the received signals by two sin/cos signals at n·f0 frequency 5, 6 and in rejecting the signals outside the band of interest, by a low-pass filtering operation 7,8. Now, the phase (I) and quadrature (Q) signals are discretized 9, digitized by the analog-to-digital converter 10, and stored in the working memory 12.

Then, a number of consecutive insonations along the same line of sight are executed, until a sufficient number of samples is reached in the working memory, allowing to apply the Power Doppler algorithm 11. For example, when using the cross-correlation algorithm, at least two samples for each point would be needed, which means that along a certain line of sight, two shots are needed for each focus.

The results of the processing operations are converted into video signals by the Scan Converter 13, using a suitable grey scale for the display 14.

By repeating this transmission/receiving process for each focus of a given line of sight, a vector is acquired. By repeating the process for all lines of sight, the whole section of tissues to be examined is scanned, and the image to be displayed is produced.

Finally, the resulting image is displayed on the screen 15.

If the demodulation frequency is selected so as to be coincident with a typical frequency, whereat the echoes of the tissues/vessels perfused by the contrast medium produce considerably higher echoes than in the regions which the contrast medium has not penetrated, it is possible to create a map of the section under examination in which only the areas penetrated by the echoenhancing agent are highlighted.

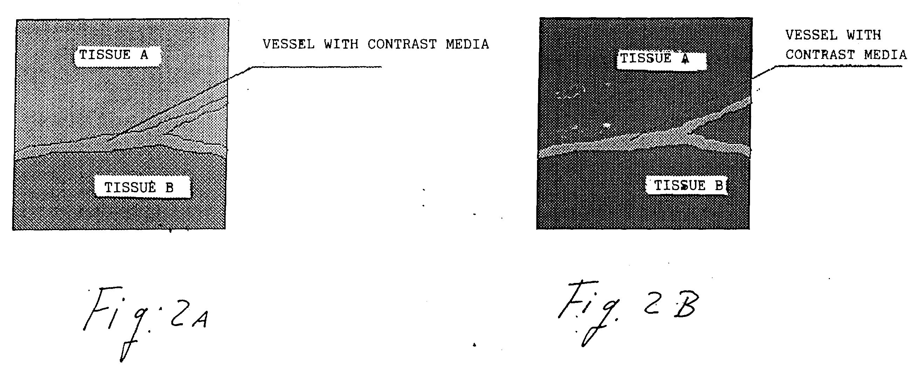

Fig. 2 shows the pictures of two B-Mode images, relating to the same section, as they could be obtained through the proposed processing chain operating in normal mode (fig. 2a), i.e. by driving the demodulator with tones having a frequency f0, or in Harmonic Imaging mode (fig. 2b), i.e. by driving the quadrature demodulator with tones having a frequency n·f0, n being not equal to 1. Supposing that the tissues to be examined are deep and that the vessel in the relevant section is very small, the analysis of the blood flow, e.g. for assessing stenosis, might be very complex even in Power Doppler mode. Therefore, the injection of an echoenhancing agent is necessary to ensure the generation of a sufficiently high signal to perform the ultrasound examination. As shown (fig. 2a), the examination made in normal B-Mode is lacking in contrast, due to the fact that the contrast medium has increased the reflection factor of the blood vessel, making it mingle with the tissue A. On the contrary, by operating on an appropriate harmonic or sub-harmonic of the transmission carrier (fig. 2b), tissues A and B, characterized by a total lack of perfusion, or by a lower perfusion with respect to the blood vessel, are almost completely obscured, generating an image in which the vessel and its borders are well outlined and may be easily inspected.

The main advantages of the proposed invention, aimed at performing B-Mode examinations with ultrasound equipment having Power Doppler facilities, are:
1. No need for specific hardware.
   Modifications to the controlling and processing software and, at most, minor alterations to hardware, not requiring, however, any layout modification of boards (and any cost implied by such revisions) are only needed.
2. Signals are digitally processed
   This produces considerable advantages in terms of flexibility, of setup simplicity when the equipment is tested, and of easy implementation of complex processing algorithms.
3. Quadrature demodulation has the function of a virtual, almost perfect passband filter, centered on the desired frequency (e.g., transmission carrier for normal B-Mode or a harmonic/sub-harmonic thereof for B-Mode Harmonic Imaging).
   Several filterings may be implemented by simply changing the frequency of sin/cos driving tones. This advantage, together with the one deriving from a fully digital processing, are particularly interesting for the upgrading of analog equipment, which could economically start the development of Harmonic Imaging facilities, only controlled, at present, by digital equipment. The main constraint in the development of analog equipment is, besides the immediate costs implied by the development of Harmonic Imaging facilities, the "unflexibility" which would be intrinsic in such implementations, which could hardly operate with the new contrast media gradually introduced in the market, unless radical changes are made to circuitry (e.g. replacement of high-pass filters, widening of response bands of chains, etc.).
4. The typical temporal filtering of Power Doppler chains i.e. averaging of consecutive frames, in order to reduce the artifacts caused by probe-patient displacements may be exploited, to implement B-Mode multifrequency techniques, wherein images are produces not by the simple contribute of the energy backscattered around the carrier frequency (normal B-Mode), or by a harmonic/sub-harmonic thereof (B-Mode Harmonic Imaging), but by several properly combined harmonic components.
   In a typical application thereof, proposed by Arditi [10] B-Mode Harmonic Imaging is performed by examining several harmonic components of the backscattering spectrum and by executing a sort of signal-processing, having the purpose to distinguish the typical spectral shapes of perfused and non perfused regions. Thanks to the proposed architecture, this can be easily obtained, by demodulating the signals of the different relevant spectral components, by storing the resulting images in the memory zones used by the Power chain, for temporal averaging, and by finally composing the different images on the basis of the selected signal-processing algorithm.
   The possibility to store and process jointly several consecutive frames may also be exploited to generate images resulting from the composition of information relating to different types of images, obtained with different reconstruction techniques and/or with different demodulation frequencies. For example, if the analysis is performed with contrast media, this mechanism might be exploited to obtain images in which the vascular system is emphasized with respect to the underlying parenchyma, by superposing the information about the presence of blood vessels (which is obtained by evaluating where the B-Mode Harmonic Imaging signal is higher than a predetermined threshold) to normal B-Mode information.

As for disadvantages, theoretically the proposed technology has no restrictions when compared with the quality of the results which may be obtained with B-Mode techniques in use both on current digital equipment and on analog equipment.

However, when the technology is used on analog equipment, there could be some restrictions depending on the hardware in use. It is likely that real-time needs would impose the compromise to use a single focus of each line of sight, in order to make up for the high computational charge required by a Power examination. The consequent lateral resolution loss, which would be acceptable for Doppler applications, would lead to B-Mode images having a poorer quality as compared with those normally produced by multifocus- or dynamic focus-operating equipment. This problem is less relevant in Harmonic Imaging applications, wherein the typical high contrast imaging would reduce the visual effect of the resolution loss. However, it should be noted that, by a deeper revision of the software controlling data acquisition, the number of focuses could be increased, thanks to the fact that, for imaging purposes, there is no longer the need for a great number of samples, two samples being already sufficient (when the cross-correlation algorithm is used).

The invention also relates to an apparatus for implementing the method according to the above disclosure, comprising a Power Doppler chain for echographic imaging, wherein there are provided means for by-passing the so-called wall-filters, and means for tuning the quadrature demodulator to the desired spectrum component of the n·f0 received signal.

The invention is not intended to be limited to the embodiments illustrated and described herein, but may be greatly varied, especially as regards construction, without departure from the guiding principle disclosed above and claimed below.

### BIBLIOGRAPHY

[1] F.Forsberg et al., "Contrast Market Braces for Ultrasound's Impact", Advanced Ultrasound (Supplement to Diagnostic Imaging Europe), pp. 5-8, September, 1996
[2] S. Otis et al., "Contrast-Enhanced Transcranial Imaging. Results of an American Phase-Two Study", Stroke, Volume 26, Number 2, February, 1995
[3] B.B.Goldberg et al., "Ultrasound Contrast Agents: a Review", Ultrasound in Medicine and Biology, Volume 20, Number 4, 1994
[4] F.G. Balen et al., "Review Ultrasound Contrast Agents", Clinical Radiology, Number 49, pp. 77-82, 1994
[5] "Levovist SH U 508 A", Drugs of the Future, 20 (12), pp. 1224-1227, 1996
[6] V.Uhlendorf et al., "Characteristics of Hollow Microspheres and their Future Applications", 1st European Symposium on Ultrasound Contrast Imaging, Rotterdam (The Netherlands), January 25-26, 1996
[7] J.M.Correas et al., "Echogen Emulsion: Current Clinical Status in the Development of the First Fluorocarbon Gas-Based Contrast Agent", 1st European Symposium on Ultrasound Contrast Imaging, Rotterdam (The Netherlands), January 25-26, 1996
[8] M.Schneider et al., "BR1: A New Ultrasonographic Contrast Agent Based on Sulfur Hexafluoride-Filled Microbubbles", 1st European Symposium on Ultrasound Contrast Imaging, Rotterdam (The Netherlands), January 25-26, 1996
[9] M.J.Monaghan, "Methods and Systems for Examining Tissue Perfusion Using Ultrasonic Contrast Agents", US Patent, 5,255,683, October 26, 1993
[10] M.Arditi, "Ultrasonic Spectral Contrast Imaging", US Patent 5,526,816, June 2, 1995
[11] P.N.Burns et al., "Harmonic Imaging: Principles and Preliminary Results", Angiology, Volume 47, Number 7, Part 2, July, 1996
[12] P.N.Burns, "Technological Aspects of Second Harmonic Imaging with Contrast Agents", 1st European Symposium on Ultrasound Contrast Imaging, Rotterdam (The Netherlands), January 25-26, 1996
[13] B.A.Schrope et al., "Second Harmonic Ultrasonic Blood Perfusion Measurement", Ultrasound Med. Biol., Volume 19, pp. 567-579, 1993
[14] B.A.Schrope et al., "Simulated Capillary Blood Flow Measurement Using a Nonlinear Ultrasonic Contrast Agent", Ultrasonic Imaging, Volume 14, pp. 134-158, 1992 [15] S.F.Forestieri et al., "Angiography using
ultrasound", US Patent 5,394,874, March 7, 1995

## Claims

1. B-Mode Imaging method, characterized in that it uses, at least partially, the Power Doppler ultrasound imaging chain, wherein Wall-Filters for suppressing the artifacts produced by vessel wall motion and by the unavoidable relative probe-patient displacements are by-passed, demodulating the received echo signals by quadrature demodulation at n·f0 frequency, in which n > 0 and n is a real number, as well as f0 is equal to the transmission carrier frequency of insonating ultrasound waves, and n·f0 is equal to the carrier frequency or to a sub-harmonic or a harmonic thereof.

2. A method for ultrasound bidimensional B-Mode image reconstruction by means of a Power Doppler chain, characterized in that it comprises the following steps:
a) insonating the patient tissues under examination, with ultrasound waves, at f0 frequency and selected power (1, 2), addressing ultrasonic beams along several lines of sight and according to predetermined focusing, and in such a way as to scan the whole section under examination.
b) receiving the echoes backscattered by the patient body and realigning them on the basis of the transmission focusing used (3).
c) quadrature demodulating, at f0 transmission carrier frequency, the received signals (4).
d) by-passing the Wall-Filters, typically used in Power Doppler, to remove echoes from stationary reflectors, and clutter produced by the unavoidable probe-patient displacements.
e) computing Power Doppler information (9, 12) and displaying it on the screen (15) by means of a proper grey scale.

3. A method as claimed in claim 1, characterized in that when examination is performed with contrast media, n·f0 demodulation frequency is freely selected according to the backscattering characteristics of the different types of echoenhancing substances in use.

4. A method as claimed in one or more of the preceding claims, characterized in that the display color scale may be freely defined and selected

5. A method as claimed in one or more of the preceding claims, characterized in that the following is performed:
a) Reconstruction of an ultrasound image by traditional B-Mode imaging (demodulation frequency being f0, i.e. equal to the carrier of insonating signals) and display thereof;
b) Selection of a predetermined field or of the whole image displayed as in a) and application of the steps claimed in one or more of the preceding claims to the area so selected;
c) Display of the image so obtained for the selected area, either separately or superposing the corresponding area or field of the image obtained though a).

6. A method as claimed in claim 1, wherein the user is allowed to select a variety of possible digital processing algorithms, which may be easily implemented in a normal Power Doppler chain (e.g., logarithmic compression, equalization of the grey level histogram, etc.), to be applied to the B-Mode images obtained, so as to improve their visual aspect.

7. A method as claimed in claim 5, wherein the invention is used to accomplish a Harmonic Imaging examination, which is to be displayed while superposing the underlying normal B-Mode image only for regions with a contrast medium perfusion higher than a predetermined threshold (the latter being possibly selectable by the user).

8. A method as claimed in claim 3, characterized in that it implements B-Mode multifrequency examination techniques.

9. A method as claimed in claim 8, characterized in that the reconstruction of the ultrasound image is performed by examining several harmonics of the backscattering spectrum, and by executing processing operations aimed at distinguishing between the typical spectral shapes of perfused and non perfused regions, demodulating the signals of the different relevant spectral components, storing the images so obtained in the memory zones used by the Power Doppler chain for temporal averaging, and finally composing the different images on the basis of predetermined signal-processing algorithms.

10. Apparatus for application of the method as claimed in claim 1, or one or more of the preceding claims 2 to 9, and having an ultrasound image reconstruction chain based on a process named Power Doppler, characterized in that it has a by-pass of the so-called Wall-Filters of the reconstruction chain based on Power Doppler method.

11. Apparatus as claimed in claim 10, characterized in that it has a quadrature demodulator, which may be tuned to one or more harmonics or sub-harmonics of the f0 carrier frequency of insonating signals.
